# EUROPEAN PATENT APPLICATION

(11) **EP 2 978 255 A2**
(43) Date of publication of application: **27.01.2016**
(21) Application number: 13796381.5
(22) Date of filing: 24.07.2013
(51) Int. Cl.: H04W 24/10, H04W 72/12, H04W 52/36

(54) **METHOD AND APPARATUS FOR SENDING POWER HEADROOM REPORT**

(30) Priority: 21.03.2013 CN 201310092694
(71) Applicant: ZTE Corporation, Shenzhen, Guangdong 518057 (CN)
(72) Inventor: CHEN, Wei, Shenzhen Guangdong 518057 (CN)
(74) Representative: Carangelo, Pierluigi
(86) International application number: PCT/CN2013/080018
(87) International publication number: WO 2013/178165

(57) **Abstract**

The present disclosure discloses a method and device for sending a Power Headroom Report (PHR), wherein the method includes that a User Equipment (UE) sends to an Evolved Universal Terrestrial Radio Access Network (EUTRAN) NodeB (eNB) a Media Access Control (MAC) Protocol Data Unit (PDU) added with a PHR. By means of the present disclosure, a PHR can be sent to an eNB by adding the PHR in a padding bit contained in an MAC PDU in the case that the PHR cannot be sent, thereby solving a problem in a related technology that an eNB fails to learn uplink quality information of a UE timely because a PHR cannot be sent to the eNB when a condition for triggering the PHR cannot be met, and further saving uplink transmission resources. In the meanwhile, the uplink quality information of the UE can be provided to the eNB more timely, thereby helping the eNB to perform scheduling more accurately and timely.

## Description

### Technical Field

The present disclosure relates to the field of communications, and including a method and device for sending a Power Headroom Report (PHR).

### Background

Long-Term Evolution (LTE), which is evolved from Universal Mobile Telecommunications Systems (UMTS) of 3^{rd} generation (3G) mobile telecommunications networks, aims at providing an uplink communication rate of 50Mbps and a downlink communication rate of 100Mbps within a bandwidth of 20M, and in order to achieve this aim, uses Orthogonal Frequency Division Multiplexing (OFDM) as a wireless access technology. The LTE only supports a Public Switched (PS) service and provides an always-online Internet Protocol (IP) connection between a User Equipment (UE) and a Public Data Network (PDN).

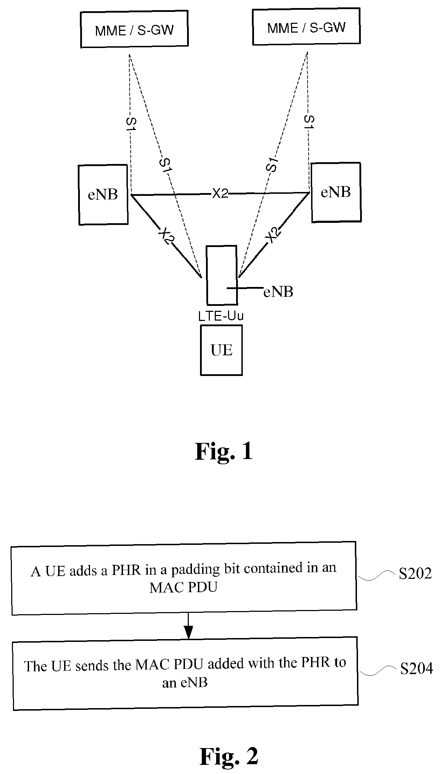

Fig. 1 shows a structure of an LTE network. As shown in Fig. 1, the LTE network comprises an Evolved Universal Terrestrial Radio Access Network (EUTRAN) and an Evolved Packet Core (EPC). The EUTRAN comprises EUTRAN NodeBs (eNB) and a UE. An eNB and the UE are connected by an LTE Uu interface (an interface between the UE and an eNB), the eNBs are connected with each other by an X2 interface (i.e. an interface between LTE eNBs) while an eNB and the EPC are connected by an S1 interface (i.e. an interface between an LTE eNB and the core network). The EUTRAN is in charge of wireless related functions, including management of a wireless resource, header compression and encryption and so on. The EPC, which comprises a Mobile Management Entity (MME), a Security Gate Way (SGW or S-GW) and a Public Data Network Gate Way (P-GW), is in charge of UE management and establishment of an Evolved Packet System (EPS) bearer. The EPS bearer is configured to match an IP stream outputted by a PDN to different UEs.

Since a shared channel is used between UEs and eNBs, an eNB needs to allocate a resource for each specific UE, which is called scheduling. The eNB needs to receive reports of various scheduling information of the UE so that the eNB can perform scheduling correctly according to a wireless environment where the UE is located. At present, it is specified that reports of scheduling information of a UE include: a Buffer Status Report (BSR) and a PHR. The BSR comprises the amount and type information of data stored by the UE in a transmission buffer area of the UE while the PHR is a report of power headroom of the UE.

Available transmission power information refers to the information of available power that may be applied to transmission of uplink data by an UE based on a current channel state. The available transmission power information is carried in a message of a Media Access Control (MAC) layer to send from the UE to an eNB, and is generally called as Uplink Power Headroom (UPH) or a PHR.

When a UE uses a transmission resource and a Modulation and Coding Scheme (MCS) allocated from an eNB to execute uplink transmission, the PHR is defined as the difference between necessary transmission power required by the uplink transmission and the maximum transmission power of the UE. The eNB calculates uplink transmission power of the UE according to a received PHR so as to allocate a resource according to the uplink transmission power of the UE and select an appropriate transmission format.

A content contained in an MAC Protocol Data Unit (PDU) is determined by an MAC layer in the UE according to the maximum allowable data transmission quantity, i.e. a grant, provided by the eNB during the uplink transmission. The MAC PDU is a PDU of the MAC layer, and the length of the MAC PDU is determined by a size of the grant. Contents in the MAC PDU include data and MAC control information elements on various logical channels, and the PHR is an MAC control information element. The MAC layer determines the contents contained in the MAC PDU in turn according to the priorities of the logical channels, and the priorities (from top to down) of various logical channels are as follows: (1) data or a Cell Radio Network Temporary Identifier (C-RNTI) control information element on an UpLink Common Control Channel (UL-CCCH); (2) BSRs besides a padding BSR; (3) a PHR; (4) data on logical channels besides a UL-CCCH; (5) a padding BSR.

If there is remaining grant after the MAC layer constructs the MAC PDU according to the priorities of the logical channels, the MAC layer will add a padding bit in the MAC PDU until all the remaining grant is used.

Under current conditions, the UE will calculate a PHR, contain the PHR in the MAC PDU and send the MAC PDU to the eNB if specific conditions as follows are satisfied.
(1) A change value of path loss measured by the UE has exceeded a threshold and a Prohibit PHR-Timer has expired. (2) A preset duration has elapsed since the UE sends the PHR (i.e. a Periodic PHR-Timer expires). (3) The PHR is configured or reconfigured.

The UE detects whether one of the foregoing three conditions is satisfied during the uplink transmission, and if so, contains the PHR in an uplink transmission packet, i.e. the MAC PDU during the transmission. Otherwise, the PHR will not be transmitted, which will disable the eNB to timely learn uplink quality information of the UE.

### Summary

A method and device for sending a PHR is provided in the embodiment of the present disclosure, so as to at least solve a problem in a related art that an eNB fails to learn uplink quality information of a UE timely because a PHR cannot be sent to the eNB when a condition for triggering to send the PHR cannot be met.

According to an aspect of the present disclosure, a method for sending a Power Headroom Report, PHR is provided, comprising: adding, by a User Equipment, UE, the PHR in a padding bit contained in a Media Access Control, MAC Protocol Data Unit, PDU; sending, by the UE, the MAC PDU added with the PHR to an evolved NodeB, eNB.

In an example embodiment, before adding, by the UE, the PHR in the padding bit contained in the MAC PDU, the method further comprises: judging whether a grant provided by the eNB is larger than or equal to a preset number of bytes, wherein the grant is used for indicating the number of sent bytes that is allowed by the eNB; when a judgment result is that the grant provided by the eNB is larger than or equal to the preset number of bytes, adding the PHR in the padding bit contained in the MAC PDU.

In an example embodiment, before judging whether the grant provided by the eNB is larger than or equal to the preset number of bytes, the method further comprises: judging whether the UE satisfies at least one of preset conditions during uplink transmission, wherein the preset conditions comprise that: a change value of path loss measured by the UE exceeds a preset threshold and a Prohibit PHR-Timer expires, the PHR has been configured or reconfigured by Radio Resource Control, RRC, a duration from a moment when the UE sends the PHR has exceeded a preset duration set by a Periodic PHR-Timer; when a judgment result is that the UE does not satisfy any one of the preset conditions, judging whether the grant provided by the eNB is larger than or equal to the preset number of bytes.

In an example embodiment, before adding, by the UE, the PHR in the padding bit contained in the MAC PDU, the method further comprises: calculating power headroom, wherein the power headroom is obtained by subtracting necessary transmission power required by uplink transmission from a maximum transmission power of the UE; generating a sub-header of the PHR; generating a content of the PHR; restarting a Periodic PHR-Timer to send the PHR again after a preset duration; restarting a Prohibit PHR-Timer. In an example embodiment, generating the content of the PHR comprises: converting a value of the power headroom into a PHR level, wherein each PHR level represents a value of corresponding power headroom.

According to another aspect of the present disclosure, a device for sending a Power Headroom Report, PHR is provided, comprising: an adding component, configured to add the PHR in a padding bit contained in a Media Access Control, MAC Protocol Data Unit, PDU; a sending component, configured to send the MAC PDU added with the PHR to an evolved NodeB, eNB.

In an example embodiment, the device further comprises: a first judging component, configured to judge whether a grant provided by the eNB is larger than or equal to a preset number of bytes, wherein the grant is used for indicating the number of sent bytes that is allowed by the eNB; the adding component is further configured to add the PHR in the padding bit contained in the MAC PDU it is determined that the grant provided by the eNB is larger than or equal to the preset number of bytes.

In an example embodiment, the device further comprises: a second judging component, configured to judge whether the UE satisfies at least one of preset conditions during uplink transmission, wherein the preset conditions comprises that: a change value of path loss measured by the UE exceeds a preset threshold and a Prohibit PHR-Timer expires, the PHR has been configured or reconfigured by Radio Resource Control, RRC, a duration from a moment when the UE sends the PHR has exceeded a preset duration set by a Periodic PHR-Timer; the first judging component is further configured to judge, when the UE does not satisfy any one of the preset conditions, whether the grant provided by the eNB is larger than or equal to the preset number of bytes.

In an example embodiment, the device further comprises: a calculating component, configured to calculate power headroom, wherein the power headroom is obtained by subtracting necessary transmission power required by uplink transmission from a maximum transmission power of the UE; a generating component, configured to generate a sub-header of the PHR and a content of the PHR; a restarting component, configured to restart a Periodic PHR-Timer to send the PHR again after a preset duration; and restart a Prohibit PHR-Timer.

In an example embodiment, the generating component may generate the content of the PHR according to a following manner: converting a value of the power headroom into a PHR level, wherein each PHR level represents a value of corresponding power headroom.

The following method is applied in the embodiment of the present disclosure: the UE adds the PHR in the padding bit contained in the MAC PDU and sends to the eNB the MAC PDU added with the PHR. By means of technical solutions provided by the embodiments of the present disclosure, a PHR can be sent to an eNB by adding the PHR in the padding bit contained in the MAC PDU in the case that the PHR cannot be sent, thereby solving the problem in the related art that the eNB fails to learn uplink quality information of the UE timely because the PHR cannot be sent to the eNB when a condition for triggering to send the PHR cannot be met, and further saving uplink transmission resources. In the meanwhile, the uplink quality information of the UE can be provided to the eNB more timely, thereby helping the eNB to perform scheduling more accurately and timely.

### Brief Description of the Drawings

The accompanying drawings illustrated herein are used for providing further understanding to the present disclosure and constitute a part of the present application. The exemplary embodiments of the present disclosure and illustration thereof are used for explaining the present disclosure, instead of constituting improper limitation to the present disclosure. In the accompanying drawings:
Fig. 1 is a structural diagram of a network of a related LTE technology;
Fig. 2 is a flowchart of a method for sending a PHR according to an embodiment of the present disclosure;
Fig. 3 is a first structural block diagram of a device for sending a PHR according to an embodiment of the present disclosure;
Fig. 4 is a second structural block diagram of a device for sending a PHR according to an embodiment of the present disclosure;
Fig. 5 is a third structural block diagram of a device for sending a PHR according to an embodiment of the present disclosure;
Fig. 6 is a diagram of an optimized process of reporting a PHR according to an example embodiment of the present disclosure;
Fig. 7 is a diagram of a process of triggering a PHR according to an example embodiment of the present disclosure;
Fig. 8 is a diagram of a flow of processing a PHR according to an example embodiment of the present disclosure;
Fig. 9 is a structural diagram of a sub-head of a PHR control information element according to an example embodiment of the present disclosure; and
Fig. 10 is a structural diagram of a content of a PHR control information element according to an example embodiment of the present disclosure.

### Detailed Description of the Embodiments

The present disclosure will be expounded hereinafter with reference to the accompanying drawings and embodiments. It needs to be noted that the embodiments in the present application and the characteristics in the embodiments may be combined with each other if there is no conflict.

Based on the problem in a related art that an eNB fails to learn uplink quality information of the UE timely because the PHR cannot be sent to the eNB when the condition for triggering to send the PHR cannot be met, a method for sending a PHR is provided in the embodiment of the present disclosure. A flow of the method may be as shown in Fig. 2, including Step 202 to Step 204.

Step 202: A UE adds a PHR in a padding bit contained in an MAC PDU.

Step 204: The UE sends the MAC PDU added with the PHR to an eNB.

By means of the embodiment, the PHR can be sent to the eNB by adding the PHR in the padding bit contained in the MAC PDU in the case that the PHR cannot be sent, thereby solving the problem in the related art that the eNB fails to learn the uplink quality information of the UE timely because the PHR cannot be sent to the eNB when the condition for triggering to send the PHR cannot be met, and further saving uplink transmission resources. In the meanwhile, the uplink quality information of the UE can be provided to the eNB more timely, thereby helping the eNB to perform scheduling more accurately and timely.

During an implementation process, before the UE adds the PHR in the padding bit contained in the MAC PDU, whether the grant provided by the eNB is larger than or equal to a preset number of bytes may be further judged, wherein the grant is used for indicating the number of sent bytes that is allowed by the eNB. If the grant provided by the eNB is larger than or equal to the preset number of bytes, the PHR is added in the padding bit contained in the MAC PDU. A relation between the grant provided by the eNB and the preset number of bytes may be judged to further utilize an idle padding bit, thereby saving transmission resources.

Before whether the grant provided by the eNB is larger than or equal to the preset number of bytes is judged, the condition of triggering the sending of the PHR may be further considered. That is, whether the UE satisfies at least one of the preset conditions during uplink transmission is judged, wherein the preset conditions include that: the change value of path loss measured by the UE exceeds a preset threshold and a Prohibit PHR-Timer expires, the PHR has been configured or reconfigured by RRC, a duration from the moment when the UE sends the PHR has exceeded a preset duration set by a Periodic PHR-Timer.

In the case that the UE satisfies any one of more of the preset conditions, it is indicated that the eNB requires the UE to send the PHR. At the moment, whether the PHR can be sent in the MAC PDU may be judged according to the priorities of the logical channels mentioned in the background art. If the PHR cannot be sent in the MAC PDU, but the eNB needs the data, the relation between the grant provided by the eNB and the preset bytes is further judged. If it is determined that the grant provided by the eNB is smaller than the preset number of bytes, the PHR is not sent. If it is determined that the grant provided by the eNB is larger than or equal to the preset number of bytes, the PHR is sent in the padding bit contained in the MAC PDU, and the eNB can obtained the required PHR.

If the UE fails to satisfy any of the preset conditions, it is indicated that the eNB may not need the UE to send the PHR at the moment. However, if the grant provided by the eNB is larger than or equal to the preset number of bytes, utilization of the padding bit may be considered. Since the padding bit contained in the MAC PDU is still in an idle state, the PHR may be sent in the padding bit contained in the MAC PDU at the moment, thus not only utilizing the idle padding bit, but also notifying the PHR of the UE to the eNB, so that uplink quality information of the UE can be provided to the eNB more timely to help the eNB to perform scheduling more accurately and timely.

A flow of processing the PHR needs to be executed during the implementation process, and the flow may be as follows: power headroom is calculated, wherein the power headroom is obtained by subtracting necessary transmission power required by the uplink transmission from the maximum transmission power of the UE; the sub-header of the PHR is generated; the content of the PHR is generated; the Periodic PHR-Timer is restarted so as to send the PHR again after the preset duration; the Prohibit PHR-Timer is restarted, wherein the step that the content of the PHR is generated may include that the value of the power headroom is converted into a PHR level, wherein each PHR level represents the value of corresponding power headroom.

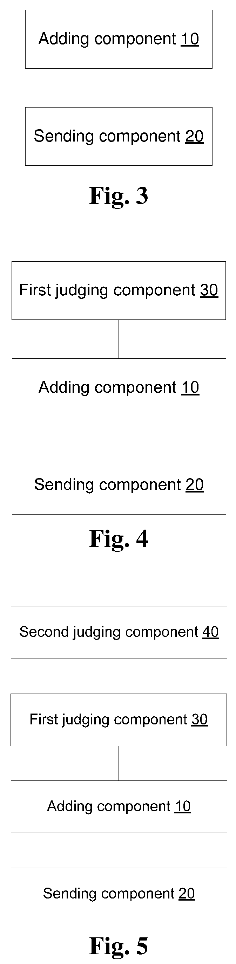

A device for sending a PHR is further provided in the embodiment of the present disclosure. A structural block diagram of the device may be as shown in Fig. 3, including: an adding component 10, configured to add the PHR in a padding bit contained in an MAC PDU; a sending component 20, coupled with the adding component 10 and configured to send the MAC PDU added with the PHR to an eNB.

Fig. 4 shows an example structural block diagram of the device, the device may further include: a first judging component 30, coupled with the adding component 10 and configured to judge whether a grant provided by the eNB is larger than or equal to a preset number of bytes, wherein the grant is used for indicating the number of sent bytes that is allowed by the eNB; the adding component 10 is further configured to add the PHR in the padding bit contained in the MAC PDU in the case that the grant provided by the eNB is larger than or equal to the preset number of bytes.

Fig. 5 shows an example structural block diagram of the device, the device may further include: a second judging component 40, coupled with the first judging component 30 and configured to judge whether the UE satisfies at least one of the preset conditions during uplink transmission, wherein the preset conditions include that: a change value of path loss measured by the UE exceeds a preset threshold and a Prohibit PHR-Timer expires, the PHR has been configured or reconfigured by RRC, a duration from the moment when the UE sends the PHR has exceeded a preset duration set by a Periodic PHR-Timer; the first judging component 30 is further configured to judge, in the case that the UE fails satisfy any one of the preset conditions, whether the grant provided by the eNB is larger than or equal to the preset number of bytes.

The device for sending a PHR according to the embodiment may further include: a calculating component, configured to calculate power headroom, wherein the power headroom is obtained by subtracting necessary transmission power required by the uplink transmission from the maximum transmission power of the UE; a generating component, configured to generate a sub-header of the PHR and a content of the PHR; a restarting component, configured to restart a Periodic PHR-Timer so as to send the PHR again after the preset duration; and restart a Prohibit PHR-Timer, wherein the generating component may generate the content of the PHR according to the following manner: a value of the power headroom is converted into a PHR level, wherein each PHR level represents the value of corresponding power headroom.

### Example embodiment

In the related art, an MAC PDU will contain padding bits in the case that a grant provided by an eNB is large enough, and these padding bits cannot provide any meaningful information to the eNB, thus wasting uplink transmission resources. In the embodiment, a PHR is carried in an unnecessary grant in this scenario to provide an optimized method for sending a PHR. Uplink transmission resources may be saved by applying the present disclosure. In the meanwhile, uplink quality information of the UE can be provided to the eNB more timely, thereby helping the eNB to perform scheduling more accurately and timely.

The optimized method for sending the PHR is described below.

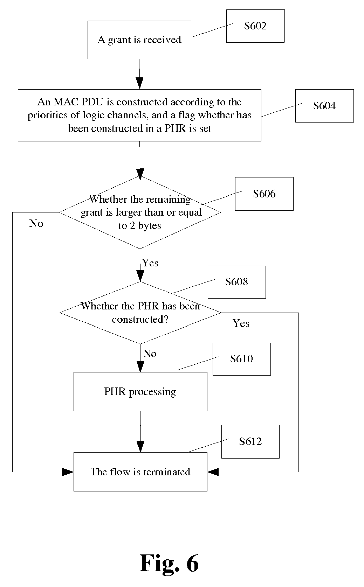

As shown in Fig. 6, the optimized flow of reporting the PHR includes Step 602 to Step 612 as follows.

Step 602: A physical layer parse a Physical Downlink Control Channel (PDCCH) to obtain an uplink grant and notifies an MAC the parsed uplink grant.

Step 604: The MAC constructs a control information element and a Service Data Unit (SDU) in an MAC PDU in turn according to the priorities of logical channels. In the case that a condition of triggering to send a PHR is satisfied, the MAC PDU will include the PHR and it is set that the PHR contains a flag bit.

Step 606: Whether the remaining grant is larger than or equal to 2 bytes is judged, and if so, Step 608 is performed, otherwise, Step 612 is performed, wherein the number of preset bytes is preferably 2. Of course, 4 bytes may be also selected as the preset bytes.

Step 608: Whether a PHR control information element has been constructed is judged according to the flag bit of the PHR, and if no, Step 610 is performed. Otherwise, Step 612 is performed.

Step 610: A PHR processing flow is executed.

Step 612: The flow is terminated.

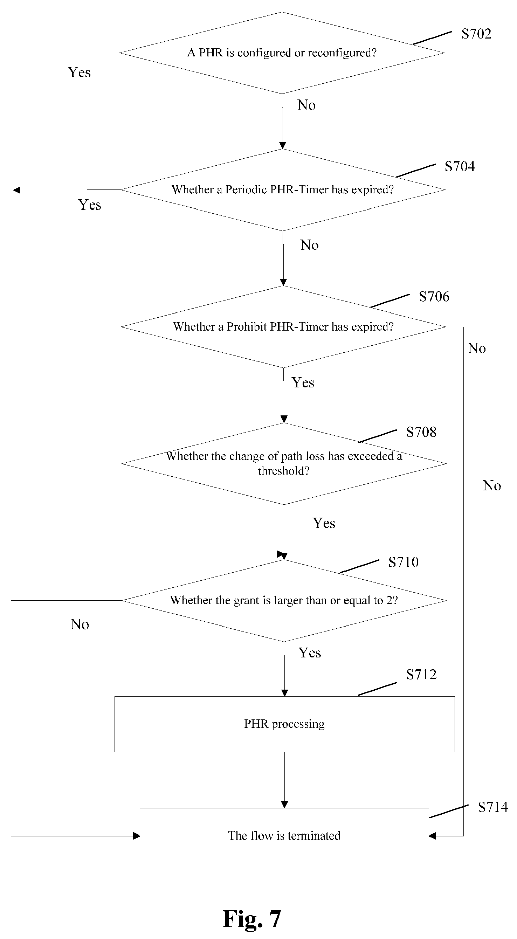

In Step 604, the MAC PDU will contain the PHR if the condition of triggering to send the PHR is satisfied and the grant is enough to contain the PHR. The judging flow provided by the embodiment may be as shown in Fig. 7, including Step 702 to Step 714.

Step 702: Whether the PHR has been configured or reconfigured by RRC is judged. If so, Step 710 is performed. Otherwise, Step 704 is performed.

Step 704: Whether a Periodic PHR-Timer has expired is judged. If yes, it is indicated that the PHR has not been sent in a period of time exceeding a preset duration since the PHR is sent last time. It is necessary to send the PHR at the moment so that an eNB can perform scheduling more timely, and then Step 710 is performed. Otherwise, Step 706 is performed.

Step 706: Whether a Prohibit PHR-Timer has expired is judged. If so, Step 708 is performed. Otherwise, Step 714 is performed.

Step 708: Whether a change value of pass loss exceeds a threshold is judged, wherein the threshold is configured by the RRC. If yes, Step 710 is performed. Otherwise, Step 714 is performed.

Step 710: Whether the grant is larger or equal to 2 is performed. If so, Step 712 is performed. Otherwise, Step 714 is performed.

Step 712: A PHR processing flow is executed.

Step 714: The flow is terminated.

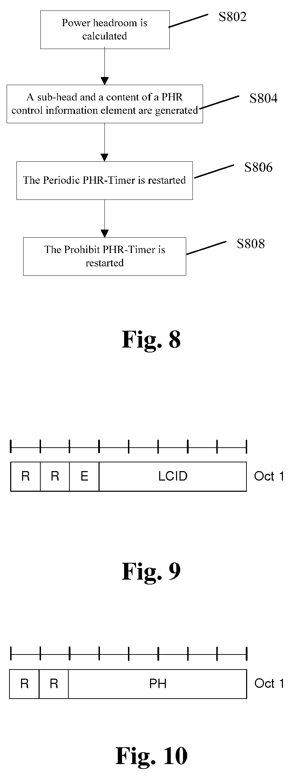

A PHR processing flow is involved in the foregoing implementation processes, and the flow may be as shown in Fig. 8, including Step 802 to Step 808.

Step 802: Power headroom is calculated. The power headroom is obtained by subtracting necessary transmission power required by the uplink transmission from the maximum transmission power of a UE.

Step 804: A PHR sub-header and a PHR content are generated. The generated PHR sub-header may be as shown in Fig. 9. The PHR sub-header is 1 byte, and a Locale Identifier (LCID) is 0x1A. The generated PHR content may be obtained by converting the value of the power headroom into a PHR level. As shown in Fig. 10, a PHR level is represented by 6 bits, and each level represents the value of corresponding power headroom.

Step 806: The Periodic PHR-Timer is restarted, and the PHR is sent forcibly after the preset duration.

Step 808: The Prohibit PHR-Timer is restarted, to as to avoid waste of uplink scheduling resources due to frequent PHR transmission.

It may be seen from the foregoing description that the present disclosure implements the following technical effect.

By means of the embodiments of the present disclosure, the PHR can be sent to the eNB by adding the PHR in the padding bit contained in the MAC PDU in the case that the PHR cannot be sent, thereby solving the problem in the related art that the eNB fails to learn uplink quality information of the UE timely because the PHR cannot be sent to the eNB when the condition for triggering to send the PHR cannot be met, and further saving uplink transmission resources. In the meanwhile, the uplink quality information of the UE can be provided to the eNB more timely, thereby helping the eNB to perform scheduling more accurately and timely.

Obviously, those skilled in the art should understand that the components or steps of the embodiments of the present disclosure may be implemented by general computing devices and centralized on a single computing device or distributed on a network consisting of multiple computing devices. Optionally, the components or steps may be implemented by program codes executable by a computing device, so that they may be stored in a storage device and executed by the computing device, and in some cases, the steps as illustrated or described may be implemented according to sequences different from those described herein, or they may be implemented by respectively fabricating them into integrated circuit components or by fabricating multiple components or steps in the components or steps into a single integrated circuit component. By doing so, the embodiments of the present disclosure are not limited to any specific combination of hardware and software.

The above are only preferred embodiments of the present disclosure, but are used for limiting the present disclosure. For those skilled in the art, the present disclosure may have various modifications and changes. Any modifications, equivalent replacements, improvements and the like made within the spirit and principles of the present disclosure shall be included in the scope of protection of the present disclosure.

### Industrial Applicability

The technical solutions provided by the embodiments of the present disclosure may be applied in a mobile communications system, and may be specifically applied in a process in which the UE reports power headroom to the eNB, for example. The technical solutions provided by the embodiments of the present disclosure are applied to an existing process in which the UE reports power headroom, thereby solving the problem in the related art that the eNB fails to learn uplink quality information of the UE timely, so that uplink transmission resources are saved and the uplink quality information of the UE can be provided to the eNB timely, thereby helping the eNB to perform scheduling more accurately and timely.

## Claims

1. A method for sending a Power Headroom Report, PHR, comprising:
adding, by a User Equipment, UE, the PHR in a padding bit contained in a Media Access Control, MAC Protocol Data Unit, PDU;
sending, by the UE, the MAC PDU added with the PHR to an evolved NodeB, eNB.

2. The method according to claim 1, wherein before adding, by the UE, the PHR in the padding bit contained in the MAC PDU, the method further comprises:
judging whether a grant provided by the eNB is larger than or equal to a preset number of bytes, wherein the grant is used for indicating the number of sent bytes that is allowed by the eNB;
when a judgment result is that the grant provided by the eNB is larger than or equal to the preset number of bytes, adding the PHR in the padding bit contained in the MAC PDU.

3. The method according to claim 2, wherein before judging whether the grant provided by the eNB is larger than or equal to the preset number of bytes, the method further comprises:
judging whether the UE satisfies at least one of preset conditions during uplink transmission, wherein the preset conditions comprise that: a change value of path loss measured by the UE exceeds a preset threshold and a Prohibit PHR-Timer expires, the PHR has been configured or reconfigured by Radio Resource Control, RRC, a duration from a moment when the UE sends the PHR has exceeded a preset duration set by a Periodic PHR-Timer;
when a judgment result is that the UE does not satisfy any one of the preset conditions, judging whether the grant provided by the eNB is larger than or equal to the preset number of bytes.

4. The method according to any one of claims 1 to 3, wherein before adding, by the UE, the PHR in the padding bit contained in the MAC PDU, the method further comprises:
calculating power headroom, wherein the power headroom is obtained by subtracting necessary transmission power required by uplink transmission from a maximum transmission power of the UE;
generating a sub-header of the PHR;
generating a content of the PHR;
restarting a Periodic PHR-Timer to send the PHR again after a preset duration;
restarting a Prohibit PHR-Timer.

5. The method according to claim 4, wherein generating the content of the PH R comprises:
converting a value of the power headroom into a PHR level, wherein each PHR level represents a value of corresponding power headroom.

6. A device for sending a Power Headroom Report, PHR, comprising:
an adding component, configured to add the PHR in a padding bit contained in a Media Access Control, MAC Protocol Data Unit, PDU;
a sending component, configured to send the MAC PDU added with the PHR to an evolved NodeB, eNB.

7. The device according to claim 6, wherein the device further comprises:
a first judging component, configured to judge whether a grant provided by the eNB is larger than or equal to a preset number of bytes, wherein the grant is used for indicating the number of sent bytes that is allowed by the eNB;
the adding component is further configured to add the PHR in the padding bit contained in the MAC PDU it is determined that the grant provided by the eNB is larger than or equal to the preset number of bytes.

8. The device according to claim 7, wherein the device further comprises:
a second judging component, configured to judge whether the UE satisfies at least one of preset conditions during uplink transmission, wherein the preset conditions comprises that: a change value of path loss measured by the UE exceeds a preset threshold and a Prohibit PHR-Timer expires, the PHR has been configured or reconfigured by Radio Resource Control, RRC, a duration from a moment when the UE sends the PHR has exceeded a preset duration set by a Periodic PHR-Timer;
the first judging component is further configured to judge, when the UE does not satisfy any one of the preset conditions, whether the grant provided by the eNB is larger than or equal to the preset number of bytes.

9. The device according to any one of claims 6 to 8, wherein the device further comprises:
a calculating component, configured to calculate power headroom, wherein the power headroom is obtained by subtracting necessary transmission power required by uplink transmission from a maximum transmission power of the UE;
a generating component, configured to generate a sub-header of the PHR and a content of the PHR;
a restarting component, configured to restart a Periodic PHR-Timer to send the PHR again after a preset duration; and restart a Prohibit PHR-Timer.

10. The device according to claim 9, wherein the generating component may generate the content of the PHR according to a following manner:
converting a value of the power headroom into a PHR level, wherein each PHR level represents a value of corresponding power headroom.
